# EUROPEAN PATENT SPECIFICATION

(11) **EP 3 824 175 B1**
(45) Date of publication and mention of the grant of the patent: **03.09.2025**
(21) Application number: 19740026.0
(22) Date of filing: 19.07.2019
(51) Int. Cl.: F03D 1/06

(54) **SYSTEM AND METHOD FOR AERODYNAMIC TORSION DAMPING OF WIND TURBINE ROTOR BLADE**
SYSTEM UND VERFAHREN ZUR AERODYNAMISCHEN TORSIONSDÄMPFUNG EINER WINDTURBINENROTORSCHAUFEL
SYSTÈME ET PROCÉDÉ D'AMORTISSEMENT DE TORSION AÉRODYNAMIQUE D'UNE PALE DE ROTOR DE TURBINE ÉOLIENNE

(30) Priority: 20.07.2018 EP 18184816
(43) Date of publication of application: 26.05.2021
(73) Proprietor: NEDERLANDSE ORGANISATIE VOOR TOEGEPAST- NATUURWETENSCHAPPELIJK ONDERZOEK TNO, 2595 DA 's-Gravenhage (NL)
(72) Inventor: ENGELS, Wouter Peter, 2595 DA 's-Gravenhage (NL)
(74) Representative: Nederlandsch Octrooibureau
(86) International application number: PCT/EP2019/069525
(87) International publication number: WO 2020/016418

(56) References cited:
- WO-A2-2014/006542
- DE-A1- 102010 041 520
- US-A1- 2011 020 128
- US-A1- 2011 142 676
- US-A1- 2014 294 592
- US-A1- 2015 316 025

## Description

### Field of the invention

The present invention relates to devices and methods for reducing or damping torsional forces experienced by an aerofoil, more particularly a wind turbine rotor blade.

### Back ground of the invention

Increasing the length of wind turbine rotor blades increases energetic yield from the system. However, as the length of wind turbine rotor blades increases, the Eigen-frequencies at which flutter occurs decrease, and the risk of serious damage to the rotor blades due to uncontrolled flutter increases.

Flutter is the aero-elastic instability that occurs as a result of interaction between the aerodynamic forces that are experienced by a blade placed in an aerodynamic flow and torsional movement of the blade due to its elasticity. Torsional movement of the rotor blade changes the angle of attack of the rotor blade in the aerodynamic flow, thus altering the aerodynamic forces experienced by the blade. This variation in aerodynamic forces creates vibration along the blade, i.e. bending of the blade along its length. When the vibrations of the blades have an unfavourable phase relationship with the varying aerodynamic forces experienced by the blades, the vibration of the rotor blade approaches resonance and potentially damaging flutter occurs. Flutter may lead to rapidly increasing vibrations of the blade and failure of the blade and must thus be limited or avoided.

Existing systems for reducing flutter are know from e.g. European Patent Application Publication EP-A-2 667 019, which describes a system in which wind turbine rotor blades are reinforced at part of the trailing edge with a tape or a foil, forming a flexible trailing edge extender. The tape or foil increases the stiffness of the rotor blade at the trailing edge, thereby reducing fluttering in the wind, and providing noise reduction. Further background art is disclosed in WO2014/006542A2 , US2015/316025A1 and US2014/294592A1.

### Summary of the invention

The present invention seeks to provide a system and method for reducing or damping the torsional forces experienced by an aerofoil, and more particularly a wind turbine rotor blade.

According to a first aspect of the invention, there is provided: a system for reducing torsion of a wind turbine rotor blade as defined by claim 1.

According to a second aspect of the invention, there is provided: a method for reducing torsion of a wind turbine rotor blade as defined by claim 7.

The terms aerofoil, leading edge and trailing edge are well known in the art, and define parts in relation to an airflow around the aerofoil during operation. In general, an aerofoil has an aerodynamic shape with a pressure side and a suction side, each extending between the leading edge and trailing edge. The pressure side and suction side are different shaped surfaces, resulting in a higher pressure and lower pressure, respectively, when air flows around the aerofoil. The term elastic axis is herein used to mean an axis generally in the longitudinal direction of the aerofoil, around which torsion of the aerofoil occurs under the influence of aerodynamic forces acting on the aerofoil during operation.

By providing an additional aerofoil positioned behind the elastic axis of the rotor blade, the lift generated by the additional aerofoil can be used to counter the torsion experienced by the rotor blade due to aerodynamic forces acting on the rotor blade. If the rotor blade experiences a torsional deformation due to the aerodynamic forces, the additional aerofoil experiences a combined motion due to torsion and displacement. This allows to provide a damping effect and/or alter flutter characteristics of the rotor blade. The position of the additional aerofoil behind the elastic axis of the rotor blade provides a lift force and moment around the elastic axis, wherein the lift force mainly acts on the trailing edge side of the rotor blade, thereby counteracting the torsional deformation of the rotor blade.

Further embodiments are described by the dependent claims.

### Brief description of the drawings

The invention will be further understood with reference to the detailed description of exemplary embodiment and the enclosed figures, in which:
Fig. 1 shows a cross-sectional view of a wind turbine rotor blade;
Fig. 2 shows a cross-sectional view of a damping system according to an example not being part of the invention;
Fig. 3 shows a cross-sectional view of a damping system according to an example not being part of the invention;
Fig. 4 shows a cross-sectional view of a damping system in accordance with an embodiment of the present invention;
Fig. 5 shows a perspective view of a wind turbine rotor blade comprising a damping system in accordance with the present invention; and
Figs. 6A and 6B each show a perspective view of a wind turbine rotor blade comprising a damping system in accordance with alternative embodiments of the present invention.

### Detailed description of illustrative embodiments

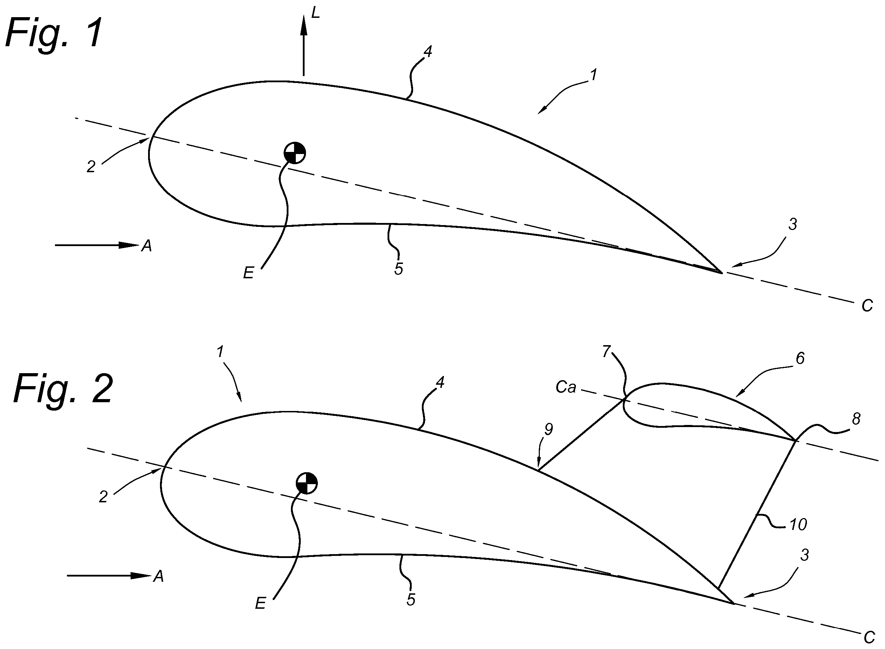

Fig. 1 shows a cross-sectional view of a wind turbine rotor blade 1. As shown in Fig. 1, the rotor blade 1 comprises an aerofoil having a leading edge 2 and a trailing edge 3. The leading edge 2 is substantially rounded and defines a forward direction and the trailing edge 3, which tapers towards a point, defines a rearward direction. An upper surface 4 extends between the leading edge 2 and the trailing edge 3 on a first side and a lower surface 5 extends between the leading edge 2 and the trailing edge 3 on a second side. A chord C runs through the cross-section of the blade 1, from the forward most point of the leading edge 2 to the rearward most point of the trailing edge 3.

The rotor blade 1 comprises an elastic axis E, which runs along the length of the rotor blade 1. The elastic axis E is defined as the shear centre along the length of the rotor blade 1. In other words, the elastic axis E is the axis extending along the rotor blade 1 along which transverse loads can be applied to producing longitudinal bending only (and no torsion). Either side of the elastic axis E, transverse loads tend to cause torsion of the rotor blade 1. The elastic axis E of an asymmetric shell beam can be determined mathematically by methods that will be apparent to the person skilled in the art. In the context of the present invention, the elastic axis is considered to be the line that passes through the elastic centre of each section of the rotor blade. A section of a rotor blade can have substantially constant cross-section along (parts of) its length or can have a constantly changing cross-section. In either case, the elastic centre of each section is the point about which the blade twists in that section.

When the rotor blade 1 is placed in an aerodynamic flow A, an angle of attack is defined as the angle between aerodynamic flow A and the chord C of the aerofoil. The shape and/or angle of attack of the rotor blade 1 result in lift L in a direction perpendicular to the direction of the aerodynamic flow A, and drag perpendicular to the lift vector L. Lift L is a transverse force vector resulting from the aerodynamic forces acting on the upper surface 4 (suction side) and lower surface 5 (pressure side) of the aerofoil. Depending on the actual shape and construction of the rotor blade, the lift vector L may be acting on the rotor blade 1 forward of the elastic axis E, which tends to cause the blade 1 to twist along its length (e.g. in a clockwise direction with reference to Fig. 1). This then will increase the (local) angle of attack of the rotor blade 1, even further increasing the lift vector L thereby increasing the torsional twist (and possibly even causing flutter). The present invention seeks to provide a system for exerting a second transverse force on the rotor blade 1, which counteracts to rotate the rotor blade 1 in the opposite direction (i.e. anti-clock wise with reference to Fig. 1). In the present invention embodiments, this second transverse force is provided by an additional aerofoil provided behind the elastic axis E of the main rotor blade 1, which generates its own lift to counteract the torsion of the rotor blade 1.

Referring now to Fig. 2, the example as shown comprises a system 20 for reducing the torsional vibrations experienced by the rotor blade 1 by damping the torsional motion caused by forces acting on the rotor blade 1. Forces acting on the blade include lift generated by the rotor blade, and may further include gravity, elastic bending coupling, torsion, etc. As shown in Fig. 2, the system 20 comprises a wind turbine rotor blade 1 comprising an aerofoil 1 having a (forward) leading edge 2 and a (rearward) trailing edge 3 as described with reference to Fig 1. The system 20 also comprises an additional aerofoil 6 coupled to the wind turbine rotor blade 1 by at least one support structure 10, the additional aerofoil 6 comprising its own (forward) leading edge 7 and (rearward) trailing edge 8. The leading edge 7 and trailing edge 8 define the chord Ca of the additional aerofoil 6. The additional aerofoil 6 is coupled to the rotor blade 1 by the at least one support structure 10 such that forces acting upon the additional aerofoil 6 are transmitted to the rotor blade 1 (e.g. the additional aerofoil 6 and the main rotor blade 1 can be fixedly (e.g. rigidly) coupled to each other). As shown in Fig. 2, the leading edge 7 of the additional aerofoil 6 is positioned rearward of the elastic axis E of the wind turbine rotor blade 1.

In the example shown in Fig. 2, the additional airfoil 6 is positioned on the suction side (the upper side) of the rotor blade 1. However, advantageously, the additional airfoil 6 can be provided on the pressure side (lower side) of the rotor blade 1. By placing the additional airfoil 6 on the pressure side, the additional airfoil shielded to a lesser extent from oncoming airflow by the main rotor blade 1.

By positioning the additional aerofoil 6 behind the elastic axis E of the rotor blade 1 (seen in the direction of the aerodynamic flow A), lift generated by the additional aerofoil 6 can be used to counteract torsional forces experienced by the rotor blade 1. As described with reference to Fig. 1, airflow A across rotor blade 1 generates lift L, which can tend to twist the rotor blade 1 about its elastic axis E (i.e. clock-wise twisting as shown in Fig. 2). With reference to the cross-sectional view in Fig. 1, this causes the leading edge 2 to lift and the trailing edge 3 to fall, and the angle of attack to increase. The twist motion of the rotor blade 1 changes the angle of attack of the additional airfoil 6 because the additional airfoil 6 is fixed relative to the rotor blade 1. The change in the angle of attack of the additional rotor blade (resulting from the twist motion of the rotor blade 1) increases the lift generated by the additional airfoil 6. The lift component generated by the additional airfoil 6 is (in phase with and) opposite to the twist motion of the main rotor blade 1. Because the additional aerofoil 6 is fixed to the main rotor blade 1, when the angle of attack of the main rotor blade 1 increases, the angle of attack for the additional aerofoil 6 also increases, thus modifying the aerodynamic forces (lift/drag) generated thereby. The relative position and shape of the additional aerofoil 6 compared to the main rotor blade 1 can be configured such that as the main rotor blade 1 twists along its length (in a clock-wise direction, as shown in Figs. 1 and 2), the counteractive lift generated by the additional aerofoil 6 is increased sufficiently to dampen the twisting motion of the rotor blade 1. The skilled person will appreciate that in a dynamic system, the torsional motion of the rotor blade 1 comprises a torsional velocity, which (due to the attachment of the additional airfoil 6 to the rotor blade 1) results in an out of plane velocity component at the secondary aerofoil 6. This velocity component leads to an additional (time varying) moment that counteracts the twist motion of the rotor blade 1.

The additional aerofoil 6 is oriented with respect to the rotor blade 1 such that it generates lift in substantially the same direction as the wind turbine rotor blade 1. For example, the additional aerofoil 6 can be configured with a cambered or asymmetric shape that generates lift in the same direction as the main aerofoil of the rotor blade 1. Alternatively or additionally, the chord Ca of the additional aerofoil 6 can be chosen to generate lift in substantially the same direction as the main aerofoil of the rotor blade 1. As will become apparent in the course or the present disclosure, the skilled person will appreciate that the chord Ca and/or the shape of the additional aerofoil 6 can be chosen independently of the chord C and shape of the rotor blade 1, depending on the desired aerodynamic modification.

As shown in Fig. 2, the at least one support structure 10 can be fixed to the wind turbine rotor blade 1 at a first attachment point 9, the first attachment point 9 being positioned rearward of the elastic axis E of the wind turbine rotor blade 1. By positioning the attachment point 9 behind the elastic axis E (i.e. towards the trailing edge 3 of the rotor blade 1), turbulence caused by the at least one support structure 10 can be minimised over the main rotor blade 1, especially in the region of the leading edge 2. However, the skilled person will appreciate that the attachment point 9 can be provided forward of the elastic axis E such that rotor blade 1 still pivots about the elastic axis E (in an anti-clockwise direction as shown in Figs. 1 and 2) due to lift generated by the additional aerofoil 6. As shown in Fig. 2, the support structure 10 may be attached to the rotor blade 1 at more than one fixation point (or e.g. along a line). In this case, the attachment point 9 comprises a foremost fixation point and a rearmost fixation point.

In the example shown in Fig. 2, the additional aerofoil 6 is offset from a chord C of the rotor blade 1 in a direction normal to the chord C of the rotor blade 1. In such embodiments, the additional aerofoil 6 can be offset from the chord C of the rotor blade 1 above the upper surface 4 or below the lower surface 5. Providing the additional aerofoil 6 above the upper surface 4 of the rotor blade 1 can provide additional advantages, although both configurations can be used to provide the required lift vector L and compensate for torsion along the length of the blade 1. The offset arrangement of the additional aerofoil(s) 6 with respect to the rotor blade 1 can advantageously minimise any negative impact of the additional aerofoil(s) 6 on the aerodynamic flow across the main rotor blade 1.

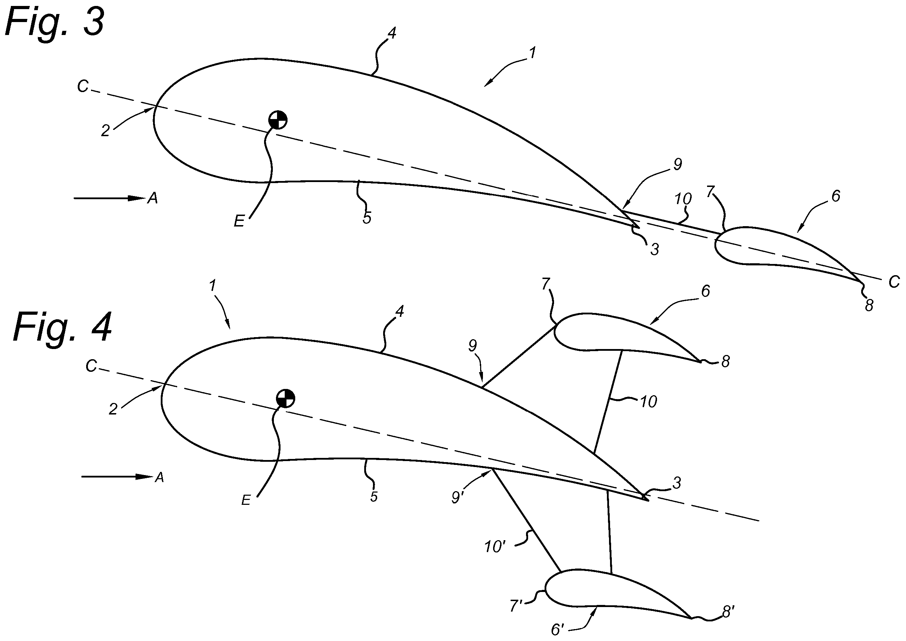

As shown in Fig. 3, the additional aerofoil 6 can be provided in line with a chord C of the wind turbine rotor blade 1. In examples in which an additional aerofoil 6 is provided in line with a chord C of the wind turbine rotor blade 1, the leading edge 7 of the additional aerofoil 6 is spaced from the trailing edge 3 of the rotor blade 1 by a distance of at least 5% of the total length of the chord of the main airfoil (rotor blade 1) More advantageously, the additional airfoil is spaced from the trailing edge 3 of the rotor blade 1 by at least 10% of the total length of the chord of the main airfoil 1. This distance can be chosen by the person skilled in the art based on obtaining substantially non-turbulent air flow A around the additional aerofoil 6. In at least one example, the distance between the leading edge of the additional airfoil 6 and the trailing edge 3 of the rotor blade 1 is chosen based on the chord length of the main rotor blade and the relative distance behind the elastic axis E. For example, in at least some embodiments, the chord length of the rotor blade 1 multiplied by the distance of the additional airfoil leading edge 6 behind the elastic axis can be ≥5%, ≥10% ≥25%, e.g. 5%-25%. The lift generated by the aerodynamic flow around the leading edge 7 of the additional aerofoil 6 shown in Fig. 3 still acts to provide a counteracting moment due to the lift provided by additional aerofoil 6, thus counteracting possible torsion of the blade 1 along its length.

In some embodiments, the chord Ca of the additional aerofoil 6 is parallel to the chord C of the main rotor blade 1. This configuration can be aerodynamically favourable, as under normal air flow A, the additional drag caused by the additional aerofoil 6 is then minimal.

In some embodiments, the system 20 can comprise a second additional aerofoil 6 coupled to wind turbine rotor blade 1, the second additional aerofoil 6' comprising a leading edge 7' and a trailing edge 8', wherein the leading edge 7' of the second additional aerofoil 6' is rearward of the elastic axis E of the wind turbine rotor blade 1. The second additional aerofoil 6' is coupled to the main rotor blade 1 by way of a second support structure 10'. Further additional aerofoils 6 (e.g. systems comprising 2, 3, 4, or more additional aerofoils) can allow to specifically tailor increases in the counteractive lift generated to damp torsion of the rotor blade 1. The skilled person will understand that the precise configuration of additional aerofoil(s) 6, 6' can be optimised depending on the specifications and operating conditions of a wind turbine rotor blade assembly. In embodiment comprising multiple additional aerofoils, the chords Ca of the additional aerofoils 6, 6' can be parallel to the chord C of the main rotor blade 1. Again, this configuration may be aerodynamically favourable due to the possible reduction of excess drag due to the additional aerofoils.

Referring now to Fig. 4, the second additional aerofoil 6' can be positioned offset from the chord C of the rotor blade 1 on the opposite side from the first additional aerofoil 6. In other words, the first additional aerofoil 6 can be positioned on a first side of the wind turbine rotor blade 1 and the second additional aerofoil 6' can be provided on a second side of the of the wind turbine rotor blade 1, wherein the first and second sides extend between the leading edge 2 and the trailing edge 3 of the wind turbine rotor blade 1.

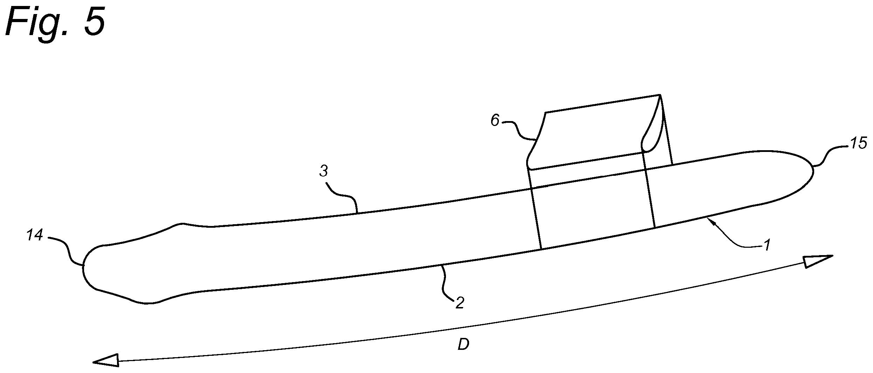

Fig. 5 shows a perspective view of a wind turbine rotor blade 1 comprising an additional aerofoil 6 for damping torsional forces experienced by the rotor blade 1. As shown in Fig. 5, the rotor blade 1 extends from a root 14 to a tip 15. The total length of the rotor blade 1 is indicated as D. In some embodiments, the additional aerofoil(s) 6, 6' can be attached to the wind turbine rotor blade 1 at a distance of between 2/3D and D from the root 14 of the wind turbine rotor blade 1. This may be advantageous in embodiments in which rotor blades are more prone to torsion towards the tip.

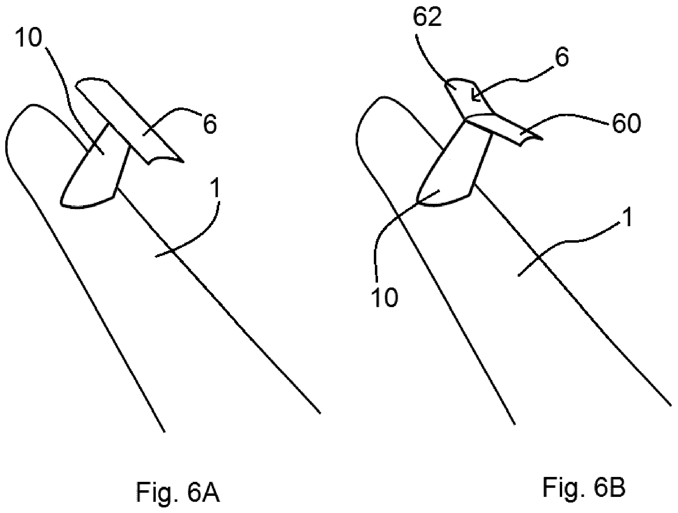

Figs. 6A and 6B each show a perspective view of a wind turbine rotor blade 1 comprising an alternative additional airfoil configuration. As shown in Fig. 6A, the additional airfoil 6 can be mounted on a single support 10, and extend in opposite directions either side of the support 10. The additional airfoil shown in Fig. 6A has substantially constant cross-section along its length and a substantially straight leading edge.

As shown in Fig. 6B, the additional airfoil 6 can be configured to have a shape resembling a T-shape tail. As shown in Fig. 6B, the additional airfoil 6 can comprise a central support 10 and two airfoil sections 60, 62 extending either side of the central support 10. As shown in Fig. 6B, the leading edges of the first and second airfoil sections 60, 62 can be angled with respect to each other.

The length along which the additional aerofoil(s) 6, 6' extend can be determined by the skilled person depending on the rotor blade 1 to which they are attached. For example, the additional aerofoil(s) 6, 6' can be provided along 10% of the total length D of the blade, at any position in the final 1/3 (the tip end) of the blade 1. Alternatively, the additional aerofoil(s) 6, 6' can be provided along substantially all of the final 1/3 of the rotor blade 1. The skilled person will understand that the additional aerofoil(s) 6, 6' may comprise a continuous foil or a series of independent foils, aligned as necessary. Of course, in some embodiments, additional aerofoil(s) 6, 6' can be provided along a greater proportion of the length of the rotor blade 1. It is noted that the dimensions of the additional aerofoil 6, 6' result in specific values of associated lift and drag, which may be optimized in view of the dimensions and characteristics of the rotor blade 1.

The selection of length and width of the additional aerofoil 6 might also advantageously influence the torsional stiffness of the entire system directly. E.g. if the attachments points are on extremities of the additional aerofoil 6, a box like structure is provided, providing additional stiffness to the system, which can counter any local bending of the rotor blade 1..Furthermore, the additional aerofoil 6 with such an attachment point structure may provide additional lift to the system as well, and via that route contribute to improved structural characteristics.

In use, the system according to the present invention described above will be employed in an assembled wind turbine comprising a plurality of rotor blades 1, each comprising additional aerofoil(s) 6, 6'.

In some embodiments, the system according to the present invention can be implemented at the time of manufacture of the rotor blade 1. In such embodiments, the additional aerofoil(s) 6, 6' can be formed as an integral part of a wind turbine rotor blade 1 or they can comprise an additional feature to be affixed to the wind turbine rotor blade 1 after manufacture of the rotor blade 1. As the resulting rotor blade 1 is less prone to the negative effects of possible torsion by the damping provided, the total mass of the rotor blade 1 may be lower, or an increase in radius of the rotor blade 1 at the same weight is possible, adding to the efficiency of a wind turbine.

In other embodiments, the present invention system may comprise an additional aerofoil(s) 6, 6' configured for attachment to the rotor blades 1 of an existing wind turbine. Such embodiments can be particularly advantageous because they allow retrofitting of additional aerofoil(s) 6, 6' to wind turbines that are known to be at risk of or currently suffer from the adverse effects of e.g. flutter caused by aerodynamic blade torsion. This is a cost effect way of reducing flutter in older or pre-existing wind turbine rotor blades. Conventional fixing means can be used to secure the additional aerofoil(s) 6, 11 to existing wind turbines (e.g. bolts, rivets, welding, adhesives, etc.)

In some embodiments, the additional aerofoil(s) 6, 6' can be configured to allow adjustable positioning/repositioning with respect to the main rotor blade 1. For example, the additional aerofoil(s) 6, 6' can be configured with a supporting portion 10 that allows the angle of attack of the additional aerofoil(s) 6, 6' to be adjusted. This can comprise a lockable repositioning system (e.g. comprising a ratchet and pawl arrangement) that can be adjusted and locked in place during fixation of the additional aerofoil(s) 6, 6' to the rotor blade 1. In some embodiments, the invention can comprise an additional aerofoil 6, 6' as described above (without the rotor blade) and a support structure 10 comprising an adjustment mechanism for varying the angle of attack of the additional aerofoil(s) 6, 6' relative to the support structure 10. Such an arrangement can maximise the flexibility of the system for retrofitting to existing wind turbine blades 1.

Use of the system will now be described with reference to Figs. 2 to 5. In use, the assembled wind turbine will be located in an aerodynamic flow (e.g. a windy region on- or off-shore). The aerodynamic flow across the rotor blades 1 drives the rotor blades 1, which in turn drive a turbine. The aerodynamic flow across the rotor blades 1, which generates a driving lift associated therewith changes the angle of attack of the additional airfoil 6 and, provides the counteractive torsional force described above.

Thus, a method for aerodynamic torsion damping of a wind turbine rotor blade can comprise the steps of: attaching, to a wind turbine rotor blade 1 comprising an aerofoil having a (forward) leading edge 2 and a (rearward) trailing edge 3, an additional aerofoil 6, 6' having a leading edge 7, 7' and a trailing edge 8, 8', wherein the leading edge 7, 7' of the additional aerofoil 6, 6' is positioned rearward of an elastic axis E of the wind turbine rotor blade 1. The method further may comprise the step of placing the additional aerofoil 6, 6' in an aerodynamic flow A to generate lift rearward of the elastic axis E of the rotor blade 1, to counter torsional forces experienced by the wind turbine rotor blade 1.

As described above, the aerodynamic forces experienced across the rotor blade 1 can be modified by the adding an additional (lift generating) aerofoil aft of the elastic axis E of the rotor blade 1, thereby providing a mechanism for damping torsional vibrations of the rotor blade 1 along its length. The precise configuration of the additional aerofoil(s) 6, 6' (e.g. the shape, location relative to the elastic axis E, the extent to which they extend along the blade, the angle of attack relative to the rotor blade 1, etc.) can be determined based on the aerodynamics of the main rotor blade 1, the structural properties of the rotor blade 1 (e.g. stiffness, length, degree of bend-twist coupling) and the intended operating conditions (turbine specification, (expected) wind conditions, etc.)

The invention has been described above by way of reference to a number of exemplary embodiments. The skilled person will recognise that variations or modifications can be made to the embodiments described above without departing from the scope of the invention, which is defined by the appended claims.

## Claims

1. A system for aerodynamic torsion damping of a wind turbine rotor blade, the system comprising:
a wind turbine rotor blade (1) comprising a first aerofoil having a leading edge (2) and a trailing edge (3); and
an additional aerofoil (6, 6') coupled to the wind turbine rotor blade (1) by at least one support structure (10, 10'), the additional aerofoil (6; 6') comprising a leading edge (7; 7') and a trailing edge (8; 8'),
wherein the leading edge (7; 7') of the additional aerofoil (6; 6') is positioned rearward of an elastic axis (E) of the wind turbine rotor blade (1), the elastic axis (E) being an axis generally in the longitudinal direction of the first aerofoil, around which torsion of the first aerofoil occurs under the influence of aerodynamic forces acting on the first aerofoil during operation,
and the additional aerofoil (6; 6') is fixed relative to the wind turbine rotor blade (1),
**characterized in that** the system comprises a second additional aerofoil (6') coupled to wind turbine rotor blade (1) by a second support structure (10'), the second additional aerofoil (6') comprising a leading edge (7') and a trailing edge (8'), and wherein the leading edge (7') of the second additional aerofoil (6') is positioned rearward of the elastic axis (E) of the wind turbine rotor blade (1),
wherein the additional aerofoil (6) is positioned on a first side of the wind turbine rotor blade (1) and the second additional aerofoil (6') is provided on a second side of the wind turbine rotor blade (1) opposite to the first side, the first and second sides extending between the leading edge (2) and the trailing edge (3) of the wind turbine rotor blade (1).

2. The system according to claim 1, wherein the at least one support structure (10; 10') is fixed to the wind turbine rotor blade (1) at a first attachment point (9; 9'), the first attachment point (9; 9') being positioned rearward of the elastic axis (E) of the wind turbine rotor blade (1).

3. The system according to claim 1 or claim 2, wherein the additional aerofoil (6; 6') is offset from a chord (C) of the rotor blade (1) in a direction normal to the chord (C) of the rotor blade (1).

4. The system according to any one of claims 1-3, wherein a chord (Ca) of the additional aerofoil (6; 6') is substantially parallel to a chord (C) of the wind turbine rotor blade (1).

5. The system according to any one of claims 1-4, wherein the rotor blade (1) extends between a root (14) and a tip (15), and wherein the additional aerofoil (6; 6') is attached to the wind turbine rotor blade (1) at a distance of between 2/3D and D from the root (14), wherein D is a total distance from the root (14) to the tip (15).

6. A wind turbine, comprising at least one wind turbine blade (1) comprising the system according to any one of claims 1-5.

7. A method for aerodynamic torsion damping of a wind turbine rotor blade, the method comprising the steps of:
attaching, to a wind turbine rotor blade (1) comprising an aerofoil having a leading edge (2) and a trailing edge (3), an additional aerofoil (6; 6') having a leading edge (7; 7') and a trailing edge (8; 8'), wherein the leading edge (7; 7') of the additional aerofoil (6; 6') is positioned rearward of an elastic axis (E) of the wind turbine rotor blade (1), the elastic axis (E) being an axis generally in the longitudinal direction of the first aerofoil, around which torsion of the first aerofoil occurs under the influence of aerodynamic forces acting on the first aerofoil during operation,
and the additional aerofoil (6; 6') is fixed relative to the wind turbine rotor blade (1); further providing a second additional aerofoil (6') coupled to wind turbine rotor blade (1) by a second support structure (10'), the second additional aerofoil (6') comprising a leading edge (7') and a trailing edge (8'), and wherein the leading edge (7') of the second additional aerofoil (6') is positioned rearward of the elastic axis (E) of the wind turbine rotor blade (1),
wherein the additional aerofoil (6) is positioned on a first side of the wind turbine rotor blade (1) and the second additional aerofoil (6') is provided on a second side of the wind turbine rotor blade (1) opposite to the first side, the first and second sides extending between the leading edge (2) and the trailing edge (3) of the wind turbine rotor blade (1)..

8. The method according to claim 7, further comprising the step of placing the additional aerofoil (6; 6') in an aerodynamic flow to generate lift rearward of the elastic axis (E) of the rotor blade (1).

9. The method according to claim 7 or claim 8, wherein the additional aerofoil (6; 6') is fixed to the wind turbine rotor blade (1) at a first attachment point (9, 9'), the first attachment point (9, 9') being positioned rearward of the elastic axis (E) of the wind turbine rotor blade (1).

10. The method according to any one of claims 7-9, wherein the method comprises the step of attaching the additional aerofoil (6; 6') to a wind turbine rotor blade (1) at a distance of between 2/3D and D from a root (14) of the wind turbine rotor blade (1), wherein D is a total distance from the root (14) to a tip (15) of the wind turbine rotor blade (1).

11. The method according to any of claims 7-10, further comprising the step of attaching a second additional aerofoil (6') to the wind turbine rotor blade (1) rearward of the elastic axis (E) of the wind turbine rotor blade (1).

## Patentansprüche

1. System zur aerodynamischen Torsionsdämpfung eines Windturbinenrotorblatts, wobei das System aufweist:
ein Windturbinenrotorblatt (1), das eine erste Tragfläche mit einer Vorderkante (2) und einer Hinterkante (3) aufweist; und
eine zusätzliche Tragfläche (6, 6'), die mit dem Rotorblatt (1) der Windturbine durch mindestens eine Stützstruktur (10, 10') verbunden ist, wobei die zusätzliche Tragfläche (6; 6') eine Vorderkante (7; 7') und eine Hinterkante (8; 8') aufweist,
wobei die Vorderkante (7; 7') der zusätzlichen Tragfläche (6; 6') hinter einer elastischen Achse (E) des Windturbinenrotorblatts (1) positioniert ist, wobei die elastische Achse (E) eine Achse ist, die im Allgemeinen in der Längsrichtung der ersten Tragfläche liegt, um die herum eine Torsion der ersten Tragfläche unter dem Einfluss der aerodynamischen Kräfte auftritt, die während des Betriebs auf die erste Tragfläche wirken, und die zusätzliche Tragfläche (6; 6') relativ zu dem Windturbinenrotorblatt (1) befestigt ist,
**dadurch gekennzeichnet, dass** das System eine zweite zusätzliche Tragfläche (6') umfasst, die mit dem Windturbinenrotorblatt (1) durch eine zweite Stützstruktur (10') gekoppelt ist, wobei die zweite zusätzliche Tragfläche (6') eine Vorderkante (7') und eine Hinterkante (8') umfasst, und wobei die Vorderkante (7') der zweiten zusätzlichen Tragfläche (6') hinter der elastischen Achse (E) des Windturbinenrotorblatts (1) angeordnet ist,
wobei die zusätzliche Tragfläche (6) auf einer ersten Seite des Windturbinenrotorblatts (1) positioniert ist und die zweite zusätzliche Tragfläche (6') auf einer zweiten Seite des Windturbinenrotorblatts (1) gegenüber der ersten Seite vorgesehen ist, wobei sich die erste und die zweite Seite zwischen der Vorderkante (2) und der Hinterkante (3) des Windturbinenrotorblatts (1) erstrecken.

2. System nach Anspruch 1, wobei die mindestens eine Stützstruktur (10; 10') an einem ersten Befestigungspunkt (9; 9') an dem Windturbinenrotorblatt (1) befestigt ist, wobei der erste Befestigungspunkt (9; 9') hinter der elastischen Achse (E) des Windturbinenrotorblatts (1) angeordnet ist.

3. System nach Anspruch 1 oder Anspruch 2, wobei die zusätzliche Tragfläche (6; 6') gegenüber einer Sehne (C) des Rotorblatts (1) in einer Richtung senkrecht zur Sehne (C) des Rotorblatts (1) versetzt ist.

4. System nach einem der Ansprüche 1 bis 3, wobei eine Sehne (Ca) der zusätzlichen Tragfläche (6; 6') im Wesentlichen parallel zu einer Sehne (C) des Rotorblatts (1) der Windkraftanlage verläuft.

5. System nach einem der Ansprüche 1 bis 4, wobei sich das Rotorblatt (1) zwischen einer Wurzel (14) und einer Spitze (15) erstreckt, und wobei die zusätzliche Tragfläche (6; 6') an dem Windturbinenrotorblatt (1) in einem Abstand zwischen 2/3D und D von der Wurzel (14) angebracht ist, wobei D ein Gesamtabstand von der Wurzel (14) zur Spitze (15) ist.

6. Windturbine mit mindestens einem Windturbinenblatt (1), das das System nach einem der Ansprüche 1-5 umfasst.

7. Verfahren zur aerodynamischen Torsionsdämpfung eines Windturbinenrotorblattes, wobei das Verfahren die Schritte umfasst:
Anbringen einer zusätzlichen Tragfläche (6; 6') mit einer Vorderkante (7; 7') und einer Hinterkante (8; 8') an einem Windturbinenrotorblatt (1), das eine Tragfläche mit einer Vorderkante (2) und einer Hinterkante (3) aufweist, wobei die Vorderkante (7; 7') der zusätzlichen Tragfläche (6; 6') hinter einer elastischen Achse (E) des Windturbinenrotorblatts (1) positioniert ist, wobei die elastische Achse (E) eine Achse im Allgemeinen in der Längsrichtung der ersten Tragfläche ist, um die herum eine Torsion der ersten Tragfläche unter dem Einfluss von aerodynamischen Kräften auftritt, die während des Betriebs auf die erste Tragfläche wirken,
und die zusätzliche Tragfläche (6; 6') relativ zu dem Windturbinenrotorblatt (1) befestigt wird;
ferner Bereitstellen einer zweiten zusätzlichen Tragfläche (6'), die mit dem Windturbinenrotorblatt (1) durch eine zweite Stützstruktur (10') gekoppelt ist, wobei die zweite zusätzliche Tragfläche (6') eine Vorderkante (7') und eine Hinterkante (8') aufweist, und wobei die Vorderkante (7') der zweiten zusätzlichen Tragfläche (6') hinter der elastischen Achse (E) des Windturbinenrotorblatts (1) angeordnet ist,
wobei die zusätzliche Tragfläche (6) auf einer ersten Seite des Windturbinenrotorblatts (1) positioniert ist und die zweite zusätzliche Tragfläche (6') auf einer zweiten Seite des Windturbinenrotorblatts (1) gegenüber der ersten Seite vorgesehen ist, wobei sich die erste und die zweite Seite zwischen der Vorderkante (2) und der Hinterkante (3) des Windturbinenrotorblatts (1) erstrecken.

8. Verfahren nach Anspruch 7, ferner umfassend den Schritt des Bringens der zusätzlichen Tragfläche (6; 6') in eine aerodynamische Strömung, um einen Auftrieb hinter der elastischen Achse (E) des Rotorblatts (1) zu erzeugen.

9. Verfahren nach Anspruch 7 oder Anspruch 8, wobei die zusätzliche Tragfläche (6; 6') an einem ersten Befestigungspunkt (9, 9') am Rotorblatt (1) der Windkraftanlage befestigt ist, wobei der erste Befestigungspunkt (9, 9') hinter der elastischen Achse (E) des Rotorblatts (1) der Windkraftanlage angeordnet ist.

10. Verfahren nach einem der Ansprüche 7-9, wobei das Verfahren den Schritt des Anbringens der zusätzlichen Tragfläche (6; 6') an einem Windturbinenrotorblatt (1) in einem Abstand zwischen 2/3D und D von einer Wurzel (14) des Windturbinenrotorblatts (1) umfasst, wobei D ein Gesamtabstand von der Wurzel (14) zu einer Spitze (15) des Windturbinenrotorblatts (1) ist.

11. Verfahren nach einem der Ansprüche 7 bis 10, ferner umfassend den Schritt des Anbringens einer zweiten zusätzlichen Tragfläche (6') an dem Windturbinenrotorblatt (1) hinter der elastischen Achse (E) des Windturbinenrotorblatts (1).

## Revendications

1. Système d'amortissement de torsion aérodynamique d'une pale de rotor d'éolienne, le système comprenant :
une pale de rotor d'éolienne (1) comprenant un premier profil aérodynamique présentant un bord d'attaque (2) et un bord de fuite (3) ; et
un profil aérodynamique supplémentaire (6, 6') couplé à la pale de rotor d'éolienne (1) par au moins une structure de support (10, 10'), le profil aérodynamique supplémentaire (6 ; 6') comprenant un bord d'attaque (7 ; 7') et un bord de fuite (8 ; 8'),
dans lequel le bord d'attaque (7 ; 7') de la pale supplémentaire (6 ; 6') est positionné en arrière d'un axe élastique (E) de la pale de rotor d'éolienne (1), l'axe élastique (E) étant un axe généralement dans la direction longitudinale du premier profil aérodynamique, autour duquel la torsion de la première pale se produit sous l'influence de forces aérodynamiques agissant sur la première pale en cours de fonctionnement, et la pale supplémentaire (6 ; 6') est fixée par rapport à la pale de rotor d'éolienne (1), **caractérisé en ce que** le système comprend
un second profil aérodynamique supplémentaire (6') couplé à la pale de rotor d'éolienne (1) par une seconde structure de support (10'), le second profil aérodynamique supplémentaire (6') comprenant un bord d'attaque (7') et un bord de fuite (8'), et dans lequel le bord d'attaque (7') du second profil aérodynamique supplémentaire (6') est positionné en arrière de l'axe élastique (E) de la pale de rotor d'éolienne (1),
dans lequel le profil aérodynamique supplémentaire (6) est positionné sur un premier côté de la pale de rotor d'éolienne (1) et le second profil aérodynamique supplémentaire (6') est prévu sur un second côté de la pale de rotor d'éolienne (1) opposé au premier côté, les premier et second côtés s'étendant entre le bord d'attaque (2) et le bord de fuite (3) de la pale de rotor d'éolienne (1).

2. Système selon la revendication 1, dans lequel la au moins une structure de support (10 ; 10') est fixée à la pale de rotor d'éolienne (1) au niveau d'un premier point de fixation (9 ; 9'), le premier point de fixation (9 ; 9') étant positionné en arrière de l'axe élastique (E) de la pale de rotor d'éolienne (1).

3. Système selon la revendication 1 ou la revendication 2, dans lequel le profil aérodynamique supplémentaire (6 ; 6') est décalé par rapport à une corde (C) de la pale de rotor (1) dans une direction perpendiculaire à la corde (C) de la pale de rotor (1).

4. Système selon l'une quelconque des revendications 1 à 3, dans lequel une corde (Ca) du profil aérodynamique supplémentaire (6 ; 6') est sensiblement parallèle à une corde (C) de la pale de rotor d'éolienne (1).

5. Système selon l'une quelconque des revendications 1 à 4, dans lequel la pale de rotor (1) s'étend entre une racine (14) et une pointe (15), et dans lequel le profil aérodynamique supplémentaire (6 ; 6') est fixé à la pale de rotor d'éolienne (1) à une distance comprise entre 2/3D et D à partir de la racine (14), où D est une distance totale de la racine (14) à la pointe (15).

6. Éolienne, comprenant au moins une pale d'éolienne (1) comprenant le système selon l'une quelconque des revendications 1 à 5.

7. Procédé d'amortissement de torsion aérodynamique d'une pale de rotor d'éolienne, le procédé comprenant les étapes consistant à :
fixer, à une pale de rotor d'éolienne (1) comprenant un profil aérodynamique présentant un bord d'attaque (2) et un bord de fuite (3), un profil aérodynamique supplémentaire (6 ; 6') présentant un bord d'attaque (7 ; 7') et un bord de fuite (8; 8'), dans lequel le bord d'attaque (7; 7') du profil aérodynamique supplémentaire (6 ; 6') est positionné en arrière d'un axe élastique (E) de la pale de rotor d'éolienne (1), l'axe élastique (E) étant un axe généralement dans la direction longitudinale du premier profil aérodynamique, autour duquel la torsion du premier profil aérodynamique se produit sous l'influence de forces aérodynamiques agissant sur le premier profil aérodynamique pendant le fonctionnement,
et le profil aérodynamique supplémentaire (6 ; 6') est fixe par rapport à la pale de rotor d'éolienne (1) ; fournissant en outre un second profil aérodynamique supplémentaire (6') couplé à la pale de rotor d'éolienne (1) par une seconde structure de support (10'), le second profil aérodynamique supplémentaire (6') comprenant un bord d'attaque (7') et un bord de fuite (8'), et dans lequel le bord d'attaque (7') du second profil aérodynamique supplémentaire (6') est positionné en arrière de l'axe élastique (E) de la pale de rotor d'éolienne (1),
dans lequel le profil aérodynamique supplémentaire (6) est positionné sur un premier côté de la pale de rotor d'éolienne (1) et le second profil aérodynamique supplémentaire (6') est prévu sur un second côté de la pale de rotor d'éolienne (1) opposé au premier côté, les premier et second côtés s'étendant entre le bord d'attaque (2) et le bord de fuite (3) de la pale de rotor d'éolienne (1).

8. Procédé selon la revendication 7, comprenant en outre l'étape consistant à placer le profil aérodynamique supplémentaire (6 ; 6') dans un écoulement aérodynamique pour générer une portance vers l'arrière de l'axe élastique (E) de la pale de rotor (1).

9. Procédé selon la revendication 7 ou la revendication 8, dans lequel le profil aérodynamique supplémentaire (6 ; 6') est fixé à la pale de rotor d'éolienne (1) au niveau d'un premier point de fixation (9, 9'), le premier point de fixation (9, 9') étant positionné en arrière de l'axe élastique (E) de la pale de rotor d'éolienne (1).

10. Procédé selon l'une quelconque des revendications 7 à 9, dans lequel le procédé comprend l'étape consistant à fixer le profil aérodynamique supplémentaire (6 ; 6') à une pale de rotor d'éolienne (1) à une distance comprise entre 2/3D et D à partir d'une racine (14) de la pale de rotor d'éolienne (1), où D est une distance totale à partir de la racine (14) jusqu'à une pointe (15) de la pale de rotor d'éolienne (1).

11. Procédé selon l'une quelconque des revendications 7 à 10, comprenant en outre l'étape consistant à fixer un second profil aérodynamique supplémentaire (6') à la pale de rotor d'éolienne (1) en arrière de l'axe élastique (E) de la pale de rotor d'éolienne (1).
